## Europäisches Patentamt
## European Patent Office
## Office européen des brevets

(19)

(11) Numéro de publication: **0 068 933**
**B1**

(12)

# FASCICULE DE BREVET EUROPEEN

(45) Date de publication du fascicule du brevet:
26.02.86

(51) Int. Cl.⁴: **B 65 G 67/60**

(21) Numéro de dépôt: **82400997.1**

(22) Date de dépôt: **01.06.82**

(54) **Appareil de manutention de matériaux en vrac, notamment pour le déchargement de navires.**

(30) Priorité: **01.07.81 FR 8112931**

(43) Date de publication de la demande:
**05.01.83 Bulletin 83/1**

(45) Mention de la délivrance du brevet:
**26.02.86 Bulletin 86/9**

(84) Etats contractants désignés:
**DE GB IT NL**

(56) Documents cités:
**DE - B - 1 246 201**
**FR - A - 1 515 122**
**FR - A - 2 217 250**
**NL - A - 7 507 338**

(73) Titulaire: **FIVES-CAIL BABCOCK, Société anonyme, 7 rue Montalivet, F-75383 Paris Cedex 08 (FR)**

(72) Inventeur: **Moreau, Jacques, 37, rue Lacordaire, F-93700 Drancy (FR)**

(74) Mandataire: **Fontanié, Etienne, FIVES-CAIL BABCOCK 7, rue Montalivet, F-75383 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne la manutention de matériaux en vrac, notamment pour le déchargement de navires.

Elle concerne plus particulièrement un appareil du type comprenant un élévateur, par exemple à godets, monté sur l'extrémité libre d'une fleche par l'intermédiaire d'un support autorisant la rotation dudit élévateur autour de son axe vertical. Les matériaux prélevés dans la cale d'un navire, sont déversés sur un transporteur porté par la fleche. Le prélèvement est souvent assuré directement par les godets de l'élévateur. Dans certains cas, il est assuré par une roue-pelle à déversement frontal qui charge les godets de l'élévateur, soit directement, soit par l'intermédiaire d'une bande transporteuse.

Si l'élévateur d'un appareil de ce type ne peut pas osciller librement, et si, à la suite d'une fausse manoeuvre, l'organe de prélevement vient buter contre un obstacle fixe ou pénètre trop profondément dans le tas de matériaux, des contraintes excessives sont engendrées dans l'organe de prélevement, dans l'élévateur auquel il est associé, voire dans la fleche elle-même. Dans certains cas, le navire peut également être endommagé.

Il importe donc de permettre le basculement de l'élévateur normalement maintenu en position verticale, lorsque son organe de prélevement (roue-pelle ou chaine à godets) est soumis à un effort latéral dépassant une valeur prédéterminée. On entend ici par effort latéral, tout effort ayant une composante horizontale, quelle que soit la direction de celle-ci.

La demande de brevet FR-A-2 217 250 décrit un appareil de manutention de matériaux en vrac pour le déchargement de navires comprenant une fleche munie d'un transporteur, un élévateur apte à prélever les matériaux dans la cale d'unnavire en vue de leur déversement sur le transporteur de flèche, ledit élévateur étant porté par un support annulaire solidaire de la flèche, une ceinture réalisée sous et entourant ce dernier, et un appui tournant sur lequel est fixée ladite ceinture ou trémie tournante. Il s'ensuit que, sous l'action d'un effort latéral s'exerçant sur l'élévateur, celui-ci ne peut basculer par rapport à l'appui tournant.

Il est connu par ailleurs du brevet FR-A-1 515 122, que dans un appui tournant comportant une couronne supérieure sur laquelle repose la partie supérieure tournante d'une excavatrice et une couronne inférieure fixée sur un engin, ainsi qu'une pluralité de billes aménagées entre les deuse couronnes les conditions optimales de fonctionnement sont obtenues lorsque la couronne superieure repose à plat sur toutes les billes, d'où l'intérêt d'en empêcher le soulèvement, par exemple au moyen de butées. L'adaptation à l'appareil suivant la demande FR-A-2 217 250 d'un appui tournant suivant le brevet FR-A-1 515 122,ne permettrait pas d'obtenir le basculement de l,élévateur du fait fere, dans l'appui tournant suivant FR-A-1515122 la couronne enté solidaire de la partie médiane de la liaison touranteengréne avec une denture solidaire de la partie supérieure tournante de l'engin. Sous l'action d'un effort latéral,ladite couronne dentée et la denture seraient inévitablement endommagées et l'appareil serait mis hors service.

L'invention a pour but d'éviter les inconvénients susmentionnés et de permettre à l'élévateur de basculer sans que l'appareil subisse le moindre dommage.

Comme celà est indiqué dans la revendication 1,elle consiste essentiellement à préoir à titre de joint tournant, une double couronne dont la couronne supérieure est utilisée à la fois comme appui et comme moyen de commande en rotation par friction de la ceinture de l'élévateur. La couronne supérieure étant elle même entraînée en rotation par un moteur solidaire du support de l'élévateur, ce dernier peut basculer sans le moindre inconvénient.

L'invention a plus précisément pour objet un appareil de manutention de matériaux en vrac, notamment pour le déchargement de navires, comprenant une fleche munie d'un transporteur, un élévateur apte à prélever les matériaux dans la cale d'un navire en vue de leur déversement sur le transporteur de flèche, ledit élévateur étant porté par un support annulaire solidaire de la flèche, une double couronne d'orientation de l'élévateur constituée par une couronne inférieur solidaire du support annulaire et une couronne supérieure caractétérisé en ce qu' une pluralite de billes est aménagée entre les deux couronnes, et une ceinture solidaire de l'élévateur, entoure ce dernier, la ceinture etant posée sans être fixée sur la couronne supérieure de telle sorte que, sous l'action d'un effort latéral s'exerçant sur l'élévateur, celui-ci puisse basculer par rapport à la double couronne tout en conservant un appui sur celle-ci, et en ce que la ceinture est entraînée par friction par la couronne supérieure laquelle présente une denture au moyen de laquelle elle est entraînée en rotation par un moteur solidaire du support annulaire, et coopère avec des butées lorsqu'elle a tendance à se soulever sous l'action de la composante verticale de l'effort s'exerçant sur l'élévateur.

Les butées sont avantageusement constituées par des galets de centrage de la couronne supérieure.

Il est par ailleurs prévu, autour de l'élévateur, une pluralité de montants solidaires du support annulaire dudit élévateur, sur chacun desquels est montée une butée limitant le déplacement de la ceinture lorsque cette dernière se soulève en décollant de la couronne supérieure, et/ou est monté un support d'un galet de centrage.

La ceinture est avantageusement munie de blocs de centrage le long de son contour intérieur, les dits blocs coopérant avec la couronne supérieure afin d'assurer le positionnement de l'élévateur, notamment lorsque, l'effort ayant provoqué le basculement de celui-ci ayant cessé, ledit élévateur reprend sa position normale.

L'invention sera mieux comprise en se référant à la description qui suit, faite en regard des dessins annexés, concernant une forme particuliere de réalisation donnée à titre d'exemple non limitatif.

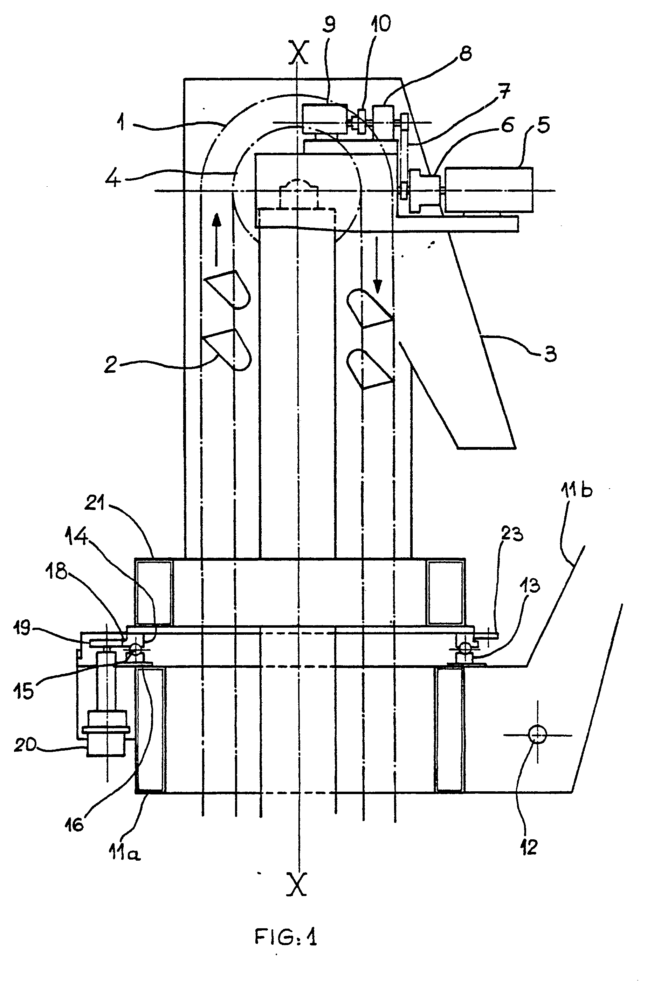

La figure 1 est une vue en coupe-élévation de l'appareil, selle la partie supérieure de l'élévateur étant représentée.

La figure 2 est une autre vue en coupe-élévation, effectuée à plus grande échelle suivant un plan angulairement décalé par rapport au plan de coupe de la figure précédente.

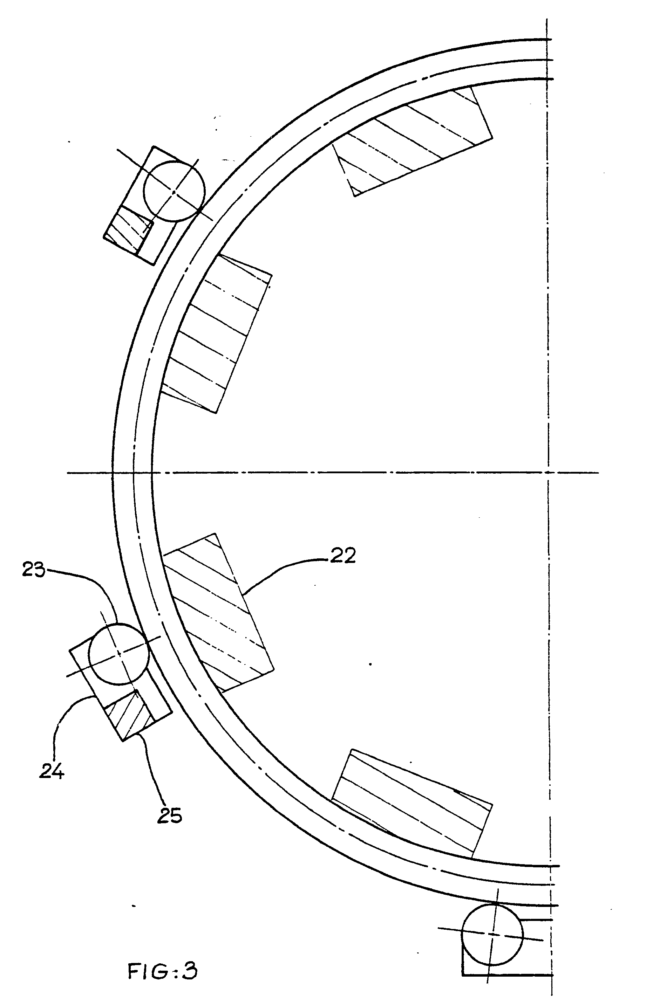

La figure 3 est une vue en coupe horizontal effect niveau de la face supérieure de la double couronne d'orientation de l'élévateur.

Sur les figures, le repère 1 désigne globalement un élévateur à godets dont seule la partie supérieure a été représentée. Les godets, tels que 2, du dit élévateur chargés de matériaux en vrac à l'intérieur de la cale d'un navire, les déversent par l'intermédiaire d'une goulotte 3 sur un transporteur à bande par exemple, porté par une flèche. La fleche et son transporteur, de types classiques, ne sont pas représentés sur les figures. Le déversement pourra être effectué par toute disposition appropriée, par exemple celle décrite dans la demande de brevet français FR-A-2492 791 déposée le 24 Octobre 1980 au nom de la société demanderesse.

Le repére 4 désigne la roue de retournement supérieure de l'élévateur 1 qui est normalement entraînée en rotation par un moteur 5 par l'intermediaire d'un embrayage 6, d,une transmission 7 et d'un réducteur de vitesse 8. Dans certains cas particuliers, à l'occasion d'une simple manoeuvre par exemple, la roue 4 est entraînée par un moteur auxiliaire 9, de plus faible puissance que le moteur 5, par l'intermédiaire d'un manchon d'accouplement 10 et du réducteur 8. Le moteur 5 est alors, bien entendu, en position débrayée.

L'élévateur 1 est monté orientable en rotation autour de son axe vertical XX, à l'intérieur d'un support annulaire constitué par le bras horizontal 11a d'un levier à deux bras, 11a et 11b, articulé en 12 sur la fleche non représentée. Le bras 11b est aménagé, de façon connue en soi, de telle sorte que, quelle que soit l'inclinaison variable de la flèche, les deux bras de levier 11a et 11b conservent leur position, ce qui assure, en régime normal, le maintien en position verticale de l'élévateur 1.

Le mouvement de rotation précité est assuré par une double couronne à roulement constituée par une couronne inférieure 13 solidaire du bras de levier 11a, une couronne supérieure 14 et une pluralité de billes, telles que 15, aménagées entre les deux couronnes profilées en conséquence.

La couronne 13 est posée sur un anneau plat 16 soudé sur le bras de levier 11a. Elle est calée au moyen de plats tels que 17 eux-mêmes soudés sur ledit anneau. La couronne 14 qui vient coiffer les billes 15 présente, à sa partie inférieure, une denture latérale 18 au moyen de laquelle elle peut être entrainée en rotation par un pignon 19 commandé par un moteur 20 monté sur le bras de levier 11a.

Le repere 21 désigne une ceinture en forme de caisson qui entoure l'élévateur 1 et qui est solidaire de la structure du dit élévateur. La ceinture 21 est simplement posée sans être fixée sur la couronne supérieure 14, sensiblement au droit des billes 15, de telle sorte que ladite couronne supporte tout le poids de l'élévateur par l'intermédiaire de ladite ceinture, sans être soumise à la moindre contrainte de flexion. Lorsque le moteur 20 est mis en marche, la couronne 14 se met à tourner ce qui provoque la rotation de l'élévateur 1 entraîné par friction.

La ceinture de l'élévateur 1 est munie le long de son contour intérieur de blocs de centrage, tels que 22, les dits blocs coopérant avec la couronne supérieure 14 afin d'assurer le positionnement de l'élévateur 1. La couronne supérieure 14 coopere de son côté avec des galets de centrage, tels que 23, dont les supports 24 sont solidaires de montants, tels que 25, répartis autour de l'élévateur 1 et solidaires du bras de levier 11a.

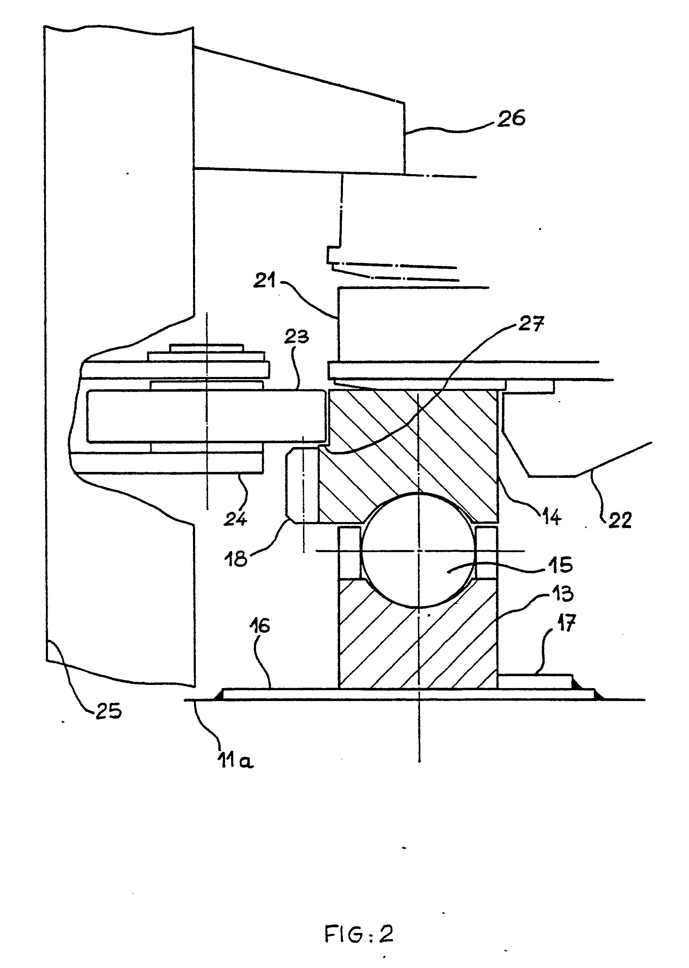

Lorsqu'un effort latéral vient s'exercer accidentellement sur l'élévateur 1, ce dernier est libre d'effectuer un mouvement de basculement tout en conservant un appui sur la couronne supérieure 14, étant donné qu'il n'existe pas de moyen de fixation de la ceinture 21 sur ladite couronne. Sous l'action de la composante verticale de l'effort qui s'exerce sur l'élévateur 1, la couronne supérieure 14 a tendance à se soulever. Ce déplacement est pratiquement empêché du fait qu'un épaulement 27 de la couronne 14 vient en contact avec un galet 23 qui joue alors le rôle d'une butée. Grâce à cette disposition, on évite toute détérioration du couple constitué par 1a denture 18 de la couronne 14 et le pignon 19. La ceinture 21 se souleve en décollant de la couronne 14. Ce déplacement est limité lorsque la ceinture 21 arrive au contact d'une butée 26 solidaire du montant 25 situé dans la zone où le déplacement de la ceinture 21 est le plus important, ladite zone étant diamétralement opposée à la zone d'appui. Chaque montant 25 est muni d'une butée 26, et, pour au moins un certain nombre d'entre eux, d'un support 24 de galet 23. La position de la ceinture 21 est alors celle représentée en traits interrompus sur la figure 2.

Le déchargement du navire est alors interrompu afin de remettre l'appareil en état de marche. Dés que l'effort ayant provoqué le basculement de l'élévateur 1 a cessé, ledit élévateur reprend sa position normale. La ceinture 21 revient alors en appui sur toute la surface supérieure de la couronne 14, le positionnement étant assuré par les blocs 22.

## Revendications

1. Appareil de manutention de matériaux en vrac, notamment pour le déchargement de navires, comprenant une flèche munie d'un transporteur, un élévateur (1) apte à prélever les matériaux dans la cale d'un navire en vue de leur déversement sur le transporteur de fleche, ledit élévateur étant porté par un support annulaire (11a) solidaire de la flèche, une double couronne d'orientation de l'élévateur (1) constituée par une couronne inférieure (13) solidaire du support annulaire et une couronne supérieure (14)t caractérisé en ce qu' une pluralité de billes (15) est aménagée entre les deux couronnes, et une ceinture (21) solidaire de l'élévateur (1) entoure ce dernier,la ceinture (21) ètant posée sans être fixée sur la couronne supérieure (14) de telle sorte que, sous l'action d'effort latéral s'exerçant sur l'élévateur (1), celui-ci puisse basculer par rapport à la double couronne (13, 14, 15) tout en conservant un appui sur celle-ci, et en ce que la ceinture (21) est entraînée par friction par la couronne supérieure (14) laquelle présente une denture (18) au moyen de laquelle elle est entraînée en rotation par un moteur (20) solidaire du support annulaire (11a), et coopere avec des butées lorsqu'elle a tendance à se soulever sous l'action de la composante verticale de l'effort s'exerçant sur l'élévateur (1).

2. Appareil suivant la revendication 1, caractérisé en ce que les butées sont consiituées par des galets de centrage (23)de la couronne supérieure (14).

3. Appareil suivant la revendication 2, caractérisé en ce qu'il est prévu, autour de l'élévateur (1), une pluralité de montants (25) solidaires du support annulaire (11a du dit éléevateur, sur chacun desquels est montée une butée (26) limitant le déplacement de la ceinture (21) lorsque cette dernière se soulève en décollant de la couronne supérieure (14) et/ou est monté un support (24) d'un galet de centrage (23).

4. Appareil suivant l'une quelconque des revendications précédentes, caractérisé en ce que la ceinture (21) de l'élévateur (1) est munie de blocs de centrage (22) le long de son contour intérieur , les dits blocs coopérant avec la couronne supérieure (14) afin d'assurer le positionnement de l'élévateur (1), notamment lorsque, l'effort ayant provoqué le basculement de celui-ci ayant cessé, ledit élévateur reprend sa position normale.

## Patentansprüche

1. Vorrichtung zur Förderung von Schüttgut, insbesondere zum Entladen von Schiffen, bestehend aus einem mit einem Förderband ausgerüsteten Ausleger, einem Elevator (1), der den Abzug des Schüttguts aus einem Schiffsladeraum zwecks dessen Abwurfs-auf das Auslegerband ermöglicht, wobei der Elevator auf einem mit dem Ausleger verbundenen Ringträger (11a) aufliegt, einem Doppelschwenkkranz des Elevators (1), der sich aus einem unteren, mit dem Ringträger verbundenen kranz (13) und einem oberen Kranz (14) zusammensetzt, dadurch gekennzeichnet, dass mehrere Kugeln (15) zwischen den beiden Kränzen angeordnet sind, und ein mit dem Elevator (1) verbundener Gürtel (21) den letzteren umgibt, wobei der Gürtel (21) auf dem oberen Kranz (14) ohne Befestigung ruht, so dass unter der Wirkung einer sich über den Elevator (1) ausübenden Seitenkraft dieser gegenüber dem Doppelkranz (13, 14, 15) kippen kann, indem er sich dabei auf dem Doppelkranz stützt, und dass der Gürtel (21) durch Reibung durch den oberen Kranz (14) mitgenommen wird, der eine Verzahnung (18) aufweist, mit der er durch einem mit dem Ringträger (11a) verbundenen Motor (20) drehangetrieben wird, un mit Anschlägen zusammenwirkt, wenn er unter der Wirkung der Vertikalkomponente der sich über den Elevator (1) ausübenden Kraft die Tendenz zum Abheben hat.

2. Vorrichtung nach Anspruch 1, dadurch gekennzeichnet, dass die Anschläge aus den oberen Kranz (i4) zentrierenden Rollen (23) bestehen.

3. Vorrichtung nach Anspruch 2, dadurch gekennzeichnet, dass um den Elevator (1) mehrere mit dem Ringträger (i1a) des Elevators verbundenen Stützen (25) vorgesehen sind, auf der jeweils ein Anschlag (26) zur Begrenzung der Bewegung des Gürtels (2i), wenn dieser sich in einer Aufwärtsbewegung vom oberen Kranz (14) abhebt, montiert ist, und/oder eine Lagerung (24) einer Zentrierrolle (23) montiert ist.

4. Vorrichtung nach irgendeinem der vorstehenden Ansprüche, dadurch gekennzeichnet, dass der Gürtel (21) des Elevators (1) längs seines inneren Umfangs mit Zentrierblöcken versehen ist, wobei diese Blöcke mit dem oberen Kranz (14) zusammenwirken, um die Positionierung des Elevators (1) zu gewahrleisten, insbesondere, wenn der Elevator seine Normalstellung wieder einnimmt, nachdem die Kraft, die ihn kippen liess, nicht mehr wirkt.

## Claims

1. Device for handling bulk material, especially for unloading ships, consisting of a boom fitted with a conveyor, an elevator (1) adapted to pick up the materials from the hold of a ship for the purpose of discharging them on to the boom conveyor, the said elevator being carried by an annular support (11a) integral with the boom, a double ring for orientation of the elevator (1) consisting of a lower ring (13) integral with the annular support and an upper ring (14), characterized by the fact that a plurality of balls (15) are located between the two rings, and that a belt (21) integral with the elevator (1) surrounds the latter, the belt (21) being laid on the upper ring (14) without being attached to it in such a way that, under the action of a lateral force applied to the elevator (1), the latter can rock with respect to the double ring (13, 14, 15) while still taking support on the latter, and by the fact that the belt (21) is driven by friction by the upper ring (14) which is provided with teeth (18) through which it is rotated by a motor (20) fastened to the annular support (11a) and works in conjunction with stops whenever it tends to be lifted under the action of the vertical component of the force acting on the elevator (1).

2. Device according to claim 1, characterized by the fact that the stops consist of rollers (23) used for the centering of the upper ring (14).

3. Device according to claim 2, characterized by the fact that a plurality of uprights (25) integral with the annular support (11a) of the said elevator are provided around the elevator (1) each upright carrying a stop (26) which limits the displacement of the belt (21) when the latter is lifted by moving away from the upper ring (14) and/or a support (24) of a centering roller (23).

4. Device according to any of the preceding claims, characterized by the fact that the belt (21) of the elevator (1) is provided with centering blocks (22) all along its internal periphery, the said blocks acting in conjunction with the upper ring (14) so as to ensure the positioning of the elevator (1) particularly when, the force which caused the latter to rock having stopped, the said elevator resumes its normal position.

FIG: 1

0 068 933

FIG: 2

3

FIG:3